# EUROPEAN PATENT APPLICATION

(11) **EP 4 793 661 A1**
(43) Date of publication of application: **19.08.2026**
(21) Application number: 25190342.3
(22) Date of filing: 18.07.2025
(51) Int. Cl.: G01S 7/521, G01D 11/24, G01S 15/10

(54) **ULTRASONIC SENSOR AND VEHICLE INCLUDING THE SAME**

(30) Priority: 13.02.2025 KR 20250018571
(71) Applicant: Hyundai Mobis Co., Ltd., Gangnam-gu Seoul 06141 (KR)
(72) Inventor: BAE, Sang Hee, 16891 Yongin-si (KR); JUNG, Jin Woo, 16891 Yongin-si (KR); KIM, Tae Woo, 16891 Yongin-si (KR)
(74) Representative: Vossius & Partner Patentanwälte Rechtsanwälte mbB

(57) **Abstract**

In an ultrasonic sensor, a lead pin electrically connecting a piezoelectric element to a printed circuit board (PCB) assembly is inserted into a fixed block, and the fixed block is fused to a housing, thereby minimizing an assembly error and thus improving performance and reliability.

## Description

This application claims the benefit of Korean Patent Application No. 10-2025-0018571, filed on February 13, 2025, which is hereby incorporated by reference as if fully set forth herein.

### BACKGROUND

### Technical Field

The present disclosure relates to an ultrasonic sensor included in a vehicle to minimize an assembly error of the ultrasonic sensor used in a parking assistance system, thereby improving performance and reliability, and the vehicle including the ultrasonic sensor.

### Discussion of the Related Art

Generally, two types including a piezoelectric type and a magnetostrictive type are mainly used for ultrasonic sensors.

The piezoelectric type uses a phenomenon in which voltage is induced upon application of pressure to an object such as quartz crystals, piezoelectric materials (lead zirconate titanate (PZT)), piezoelectric polymers, etc., and vibration is induced upon application of voltage to the object, and the magnetostrictive type uses a Joule effect (vibration occurs upon application of a magnetic field) and a Villari effect (a magnetic field is generated upon application of stress) which occur in alloys of iron, nickel, cobalt, etc.

The ultrasonic sensors use an element having piezoelectric and magnetostrictive characteristics as a vibration source, and upon application of electric energy of a high frequency to a ceramic element, rapid vibration occurs a same number of times as the frequency, and in this case, the piezoelectric ceramic element may generate ultrasonic waves having a specific frequency band that is not audible by humans due to vibration if an applied frequency is 20 kHz or more.

In particular, a sensor performs sensing by using ultrasonic waves generated via the piezoelectric element, intermittently transmits an ultrasonic pulse signal, and receives reflected waves from an obstacle in surroundings to sense an object.

Herein, as an ultrasonic sensor included in a vehicle for use in a parking assistant system is exposed to the exterior of the vehicle, the ultrasonic sensor is exposed at all times to all external environments such as external foreign substances including rain, snow, dirt, etc., and high and low temperatures.

If the ultrasonic sensor is exposed to the external environment for a long time, durability quality problems may occur. For example, if moisture like rainwater is introduced between components of the ultrasonic sensor, there may occur a problem in performance of the ultrasonic sensor due to a short-circuit of an internal part.

Thus, the ultrasonic sensor included in the vehicle needs to provide sufficient and stable waterproof performance. Moreover, there is a need for a scheme to enable cheap and simple manufacturing and minimize an assembly error.

### SUMMARY

The present disclosure aims to provide an ultrasonic sensor and a vehicle including the same, and more specifically, an ultrasonic sensor included in a vehicle to minimize an assembly error of the ultrasonic sensor used in a parking assistance system, thereby improving performance and reliability, and the vehicle including the ultrasonic sensor.

The present disclosure also aims to provide an ultrasonic sensor capable of providing stable sensing performance and waterproof performance while being manufactured cheaply and simply.

The technical problems obtainable from the present disclosure are not limited to the technical problems mentioned above, and other technical problems not mentioned will be clearly understood by those of ordinary skill in the art to which the present disclosure belongs from the description below.

According to an aspect of the present disclosure, an ultrasonic sensor includes a housing open in a front and a rear thereof to form an accommodation space in the housing, a cell case inserted into the front of the accommodation space and open in a rear of the cell case to form an inner space therein, a piezoelectric element disposed in a front of the inner space, a printed circuit board (PCB) assembly inserted into the accommodation space and disposed in the rear of the cell case, a lead-pin assembly electrically connecting the piezoelectric element to the PCB assembly in the accommodation space, a filler filled in a space requiring electrical connection between the piezoelectric element and the PCB assembly in the accommodation space and the inner space, and a rear cover sealing a rear of the accommodation space, in which the lead-pin assembly includes a lead pin having a first end electrically connected to the PCB assembly and a second end electrically connected to the piezoelectric element and a fixed block into which the lead pin is inserted and which is fused to the housing.

The housing may include a seating portion to which the fixed block is fused.

The seating portion may include a fusion projection formed to protrude, and the fixed block may be fused to the seating portion as the fusion projection is melt by laser welding.

The lead-pin assembly may be formed by insert-injection.

The ultrasonic sensor may further include a sealing cap inserted into the accommodation space to allow an end of the cell case to be fitted thereinto and a front cover inserted into the accommodation space to adjoin a front surface of the sealing cap and surrounding an outer circumferential surface of the cell case.

The front cover may include a plurality of fitting ribs formed to be spaced apart from each other on an outer circumferential surface thereof, and the housing may include a plurality of openings formed to allow the plurality of fitting ribs to be led therein.

The front cover may include a crush rib formed to protrude to a rear thereof and pressed to a front surface of the sealing cap.

The ultrasonic sensor may further include a protection cap disposed in a front of the front cover and surrounding the outer circumferential surface of the cell case protruding from the front of the housing.

The ultrasonic sensor may further include a connector pin having an end electrically connected to the PCB assembly, in which the housing includes a connector extending from a side thereof and accommodating another end of the connector pin.

According to another aspect of the present disclosure, a vehicle includes a vehicle body and an ultrasonic sensor mounted on the vehicle body and configured to sense an object around the vehicle body and measure a position and a distance of the sensed object, in which the ultrasonic sensor includes a housing open in a front and a rear thereof to form an accommodation space in the housing, a cell case inserted into the front of the accommodation space and open in a rear of the cell case to form an inner space therein, a piezoelectric element adhered to a front inner surface of the cell case, a printed circuit board (PCB) assembly inserted into the accommodation space and disposed in the rear of the cell case, a lead-pin assembly electrically connecting the piezoelectric element to the PCB assembly in the accommodation space, a filler filled in a space requiring electrical connection between the piezoelectric element and the PCB assembly in the accommodation space and the inner space, and a rear cover sealing a rear of the accommodation space, in which the lead-pin assembly includes a lead pin having a first end electrically connected to the PCB assembly and a second end electrically connected to the piezoelectric element and a fixed block into which the lead pin is inserted and which is fused to the housing.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a perspective view of an ultrasonic sensor according to an embodiment of the present disclosure;
FIG. 2 is an exploded view of an ultrasonic sensor according to an embodiment of the present disclosure;
FIG. 3 shows an inner side of an ultrasonic sensor according to an embodiment of the present disclosure;
FIG. 4 is a perspective view of an ultrasonic sensor according to another embodiment of the present disclosure;
FIG. 5 shows a lead-pin assembly located in an accommodation space of a housing in an ultrasonic sensor according to an embodiment of the present disclosure;
FIG. 6 shows a lead-pin and a fixed block of a lead-pin assembly in an ultrasonic sensor according to an embodiment of the present disclosure;
FIG. 7 is a view for describing a feature of fusing a fixed block to a seating portion of a housing in an ultrasonic sensor according to an embodiment of the present disclosure; and
FIG. 8, FIG. 9, FIG. 10 and FIG. 11 are views for describing characteristics of a front cover inserted into an accommodation space of a housing in an ultrasonic sensor according to an embodiment of the present disclosure.

### DETAILED DESCRIPTION

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical spirit disclosed in the present specification. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

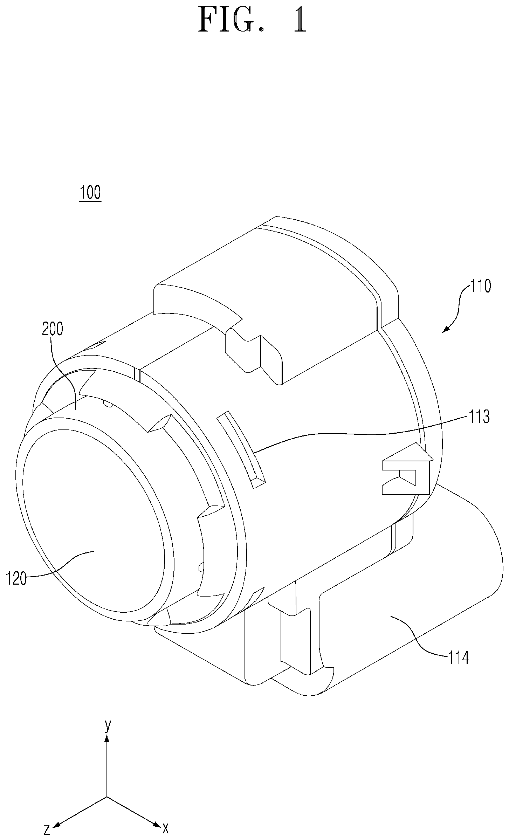

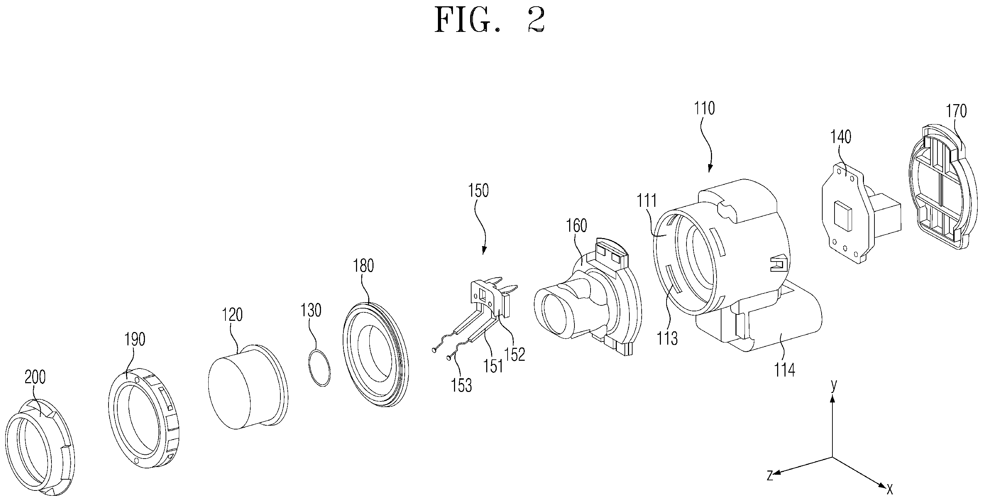

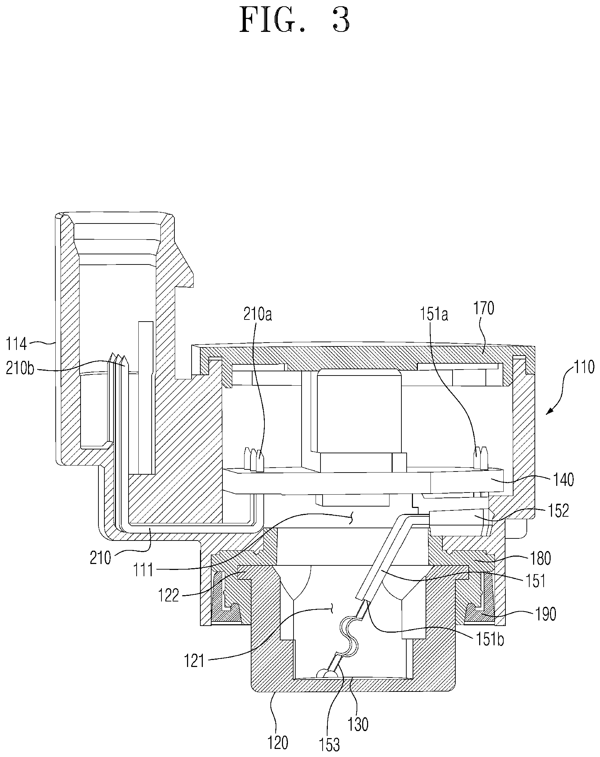

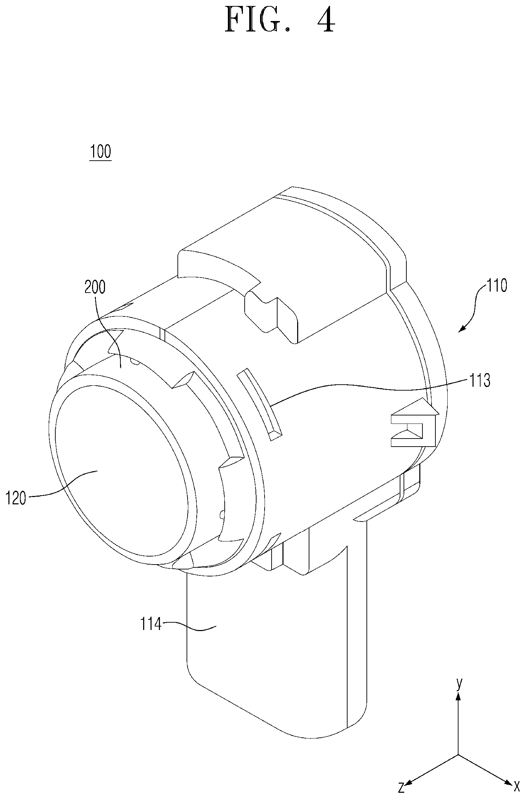

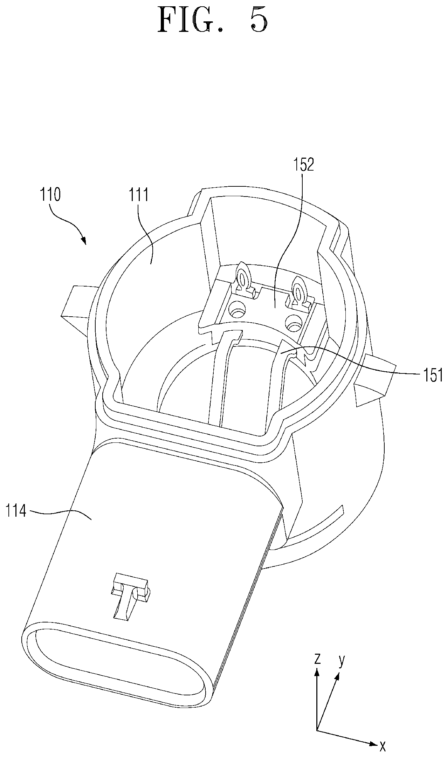

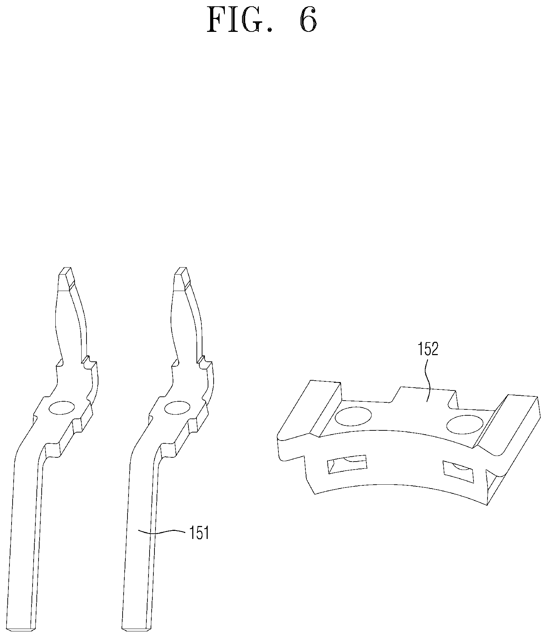

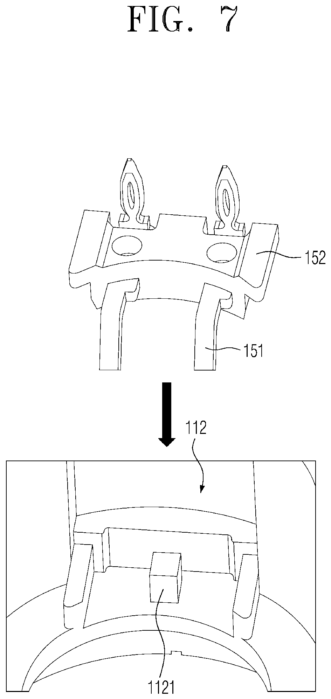

FIG. 1 is a perspective view of an ultrasonic sensor 100 according to an embodiment of the present disclosure. FIG. 2 is an exploded view of the ultrasonic sensor 100 according to an embodiment of the present disclosure. FIG. 3 shows an inner side of the ultrasonic sensor 100 according to an embodiment of the present disclosure. FIG. 4 is a perspective view of the ultrasonic sensor 100 according to another embodiment of the present disclosure. FIG. 5 shows a lead-pin 151 assembly 150 located in an accommodation space 111 of a housing 110 in the ultrasonic sensor 100 according to an embodiment of the present disclosure. FIG. 6 shows the lead pin 151 and a fixed block 152 of the lead-pin 151 assembly 150 in the ultrasonic sensor 100 according to an embodiment of the present disclosure. FIG. 7 is a view for describing a feature of fusing the fixed block 152 to a seating portion 112 of the housing 110 in the ultrasonic sensor 100 according to an embodiment of the present disclosure.

To describe the ultrasonic sensor 100 according to the present disclosure, a left-right direction refers to an x-axis direction, an up-down direction refers to a y-axis direction, and a forward-backward direction refers to a z-axis direction.

Referring to FIGS. 1 to 3 together, the ultrasonic sensor 100 according to an embodiment of the present disclosure may be mounted on a vehicle body to sense an object around the vehicle body, and measure a position and a distance of the sensed object. That is, the ultrasonic sensor 100 according to an embodiment of the present disclosure may be provided in the vehicle and used in the parking assistant system. Thus, the ultrasonic sensor 100 according to an embodiment of the present disclosure may be mounted on a front surface, a rear surface, and a side surface of the vehicle body, for example, a side mirror, a bumper, a grill, etc.

The ultrasonic sensor 100 according to an embodiment of the present disclosure may include the housing 110, a cell case 120, a piezoelectric element 130, a printed circuit board (PCB) assembly 140, a lead-pin assembly 150, a filler 160, and a rear cover 170.

The housing 110 may be open in a front and a rear (the z-axis direction) to form the accommodation space 111. The cell case 120 may be inserted into a front of the accommodation space 111 and be open in a rear to form an inner space 121. The piezoelectric element 130 may be disposed in the front of the inner space 121 of the cell case 120. In this case, the piezoelectric element 130 may be adhered to a front inner side of the cell case 120. In this way, the cell case 120 having the piezoelectric element 130 adhered thereto may transmit and receive ultrasonic waves.

The PCB assembly 140 may be inserted into the accommodation space 111 and disposed at the rear of the cell case 120. The lead-pin assembly 150 may electrically connect the piezoelectric element 130 to the PCB assembly 140 in the accommodation space 111.

Herein, the lead-pin assembly 150 may include the lead pin 151, the fixed block 152, and a wire 153. An end 151a of the lead pin 151 may be electrically connected to the PCB assembly 140. The wire 153 may be disposed at another end 151b of the lead pin 151 in which the other end 151b may be electrically connected to the piezoelectric element 130. A bonding strength may be improved by pressing and welding the wire 153 to the other end 151b of the lead pin 151.

After the piezoelectric element 130 and the PCB assembly 140 are electrically connected to each other through the lead-pin assembly 150, the filler 160 may be filled in a space requiring electrical connection between the piezoelectric element 130 and the PCB assembly 140 in the accommodation space 111 and the inner space 121. That is, the filler 160 may fill the inner space 121 and the accommodation space 111 between the piezoelectric element 130 and the PCB assembly 140, thereby minimizing moisture remaining inside when the ultrasonic sensor 100 according to the present disclosure is assembled.

Moreover, the wire 153 of the lead-pin assembly 150 may be formed to be bent in the ultrasonic sensor 100 according to an embodiment of the present disclosure. This is intended to prevent a short-circuit of the wire 153 and maintain, as stable, a connection state between the wire 153 and the piezoelectric element 130 and a connection state between the wire 153 and the lead pin 151 as the wire 153 accepts deformation due to shrinkage and expansion of the filler 160.

The rear cover 170 may be coupled to the housing 110 to seal the rear of the accommodation space 111. By securing an excellent exterior of the ultrasonic sensor 100 according to the present disclosure through the rear cover 170, stable and reliable waterproof performance and sensing performance may be guaranteed.

Moreover, the ultrasonic sensor 100 according to an embodiment of the present disclosure may include a sealing cap 180 inserted into the accommodation space 111 to allow an end 122 of the cell case 120 to be fitted thereinto. The ultrasonic sensor 100 according to an embodiment of the present disclosure may also include a front cover 190 inserted into the accommodation space 111 to surround an outer circumferential surface of the cell case 120 while adjoining a front surface of the sealing cap 180.

The ultrasonic sensor 100 according to an embodiment of the present disclosure may further include a protection cap 200 disposed in the front of the front cover 190 and surrounding the outer circumferential surface of the cell case 120 protruding from the front of the housing 110.

The ultrasonic sensor 100 according to an embodiment of the present disclosure may include a connector pin 210 having an end 210a electrically connected to the PCB assembly 140. The housing 110 may include a connector 114 extending from a side thereof and accommodating another end 210b of the connector pin 210. Herein, the ultrasonic sensor 100 according to the present disclosure may be electrically connected to an external device through the connector 114 and the other end 210b of the connector pin 210.

Thus, the ultrasonic sensor 100 according to an embodiment of the present disclosure may form the connector 114 integrally on the housing 110 to allow the connector 114 to be integrally molded in injection molding of the housing 110, thereby saving cost. Moreover, it is possible to prevent moisture inflow or assembly failure that may occur in a structure where the housing 110 and the connector 114 are assembled separately.

Referring to FIG. 4 together, the ultrasonic sensor 100 according to the present disclosure may variously form the shape of the connector 114 of the housing 110. The connector pin 210 may be formed to have a shape corresponding to the shape of the connector 114. When the ultrasonic sensor 100 according to the present disclosure is mounted on the vehicle body, the degree of freedom of design may be secured according to a mounting position through various shapes of the connector 114.

In the ultrasonic sensor 100 according to an embodiment of the present disclosure, the PCB assembly 140 may be coupled by a press-fit method in a state of the lead pin 151 and the connector pin 210 being assembled to each other. That is, as the PCB assembly 140 is electrically connected to the end 151a of the lead pin 151 and the end 210a of the connector pin 210 at the same time, the PCB assembly 140 may be assembled. In this way, an assembly process may be shortened.

Referring to FIGS. 5 to 7 together, in the ultrasonic sensor 100 according to an embodiment of the present disclosure, the housing 110 may include the seating portion 112 to which the fixed block 152 is fused. In this case, the seating portion 112 may include a fusion projection 1121 formed to protrude, and the fixed block 152 may be fused to the seating portion 112 as the fusion projection 1121 is melt by laser welding.

In a general case where the lead pin 151 is assembled by being simply fitted to a coupling position formed in the housing 110, an assembly error may occur. As a result, in press-fitting of the PCB assembly 140 using the press-fit method, the lead pin 151 may be bent. After the press-fitting of the PCB assembly 140, the height of the lead pin 151 may be different from a reference height, resulting in a failure.

Thus, to solve the foregoing problems, the ultrasonic sensor 100 according to an embodiment of the present disclosure may constitute the lead-pin assembly 150 in a state of the lead pin 151 being inserted into the fixed block 152 and include the seating portion 112 to which the fixed block 152 is fused to the housing 110. By melting the fusion projection 1121 formed on the seating portion 112 using laser welding, the fixed block 152 may be fused.

That is, the ultrasonic sensor 100 according to an embodiment of the present disclosure may constitute the separate fixed block 152 to minimize an assembly error of the lead pin 151 and further include the seating portion 112 having the fusion projection 1121 on the housing 110, thereby minimizing an assembly error that may occur in the assembly process of the lead pin 151.

Moreover, in the ultrasonic sensor 100 according to an embodiment of the present disclosure, the lead-pin assembly 150 may be formed by insert-injection such that the lead pin 151 may be injection-molded in a state of the lead pin 151 being inserted into the fixed block 152. In this way, the assembly process of the lead pin 151 may be simplified, thereby innovatively shortening a production process.

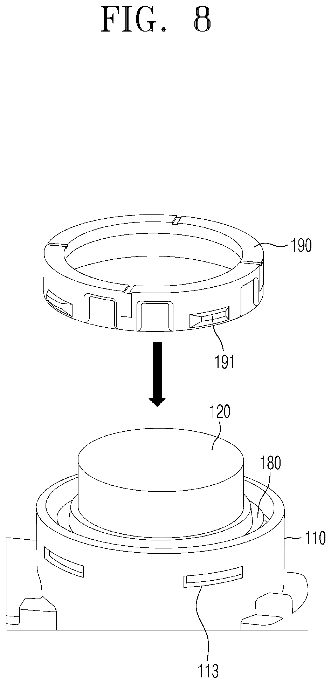

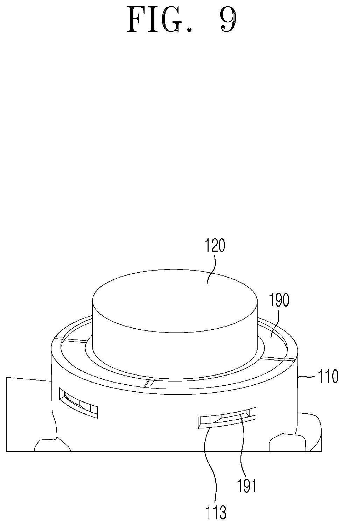

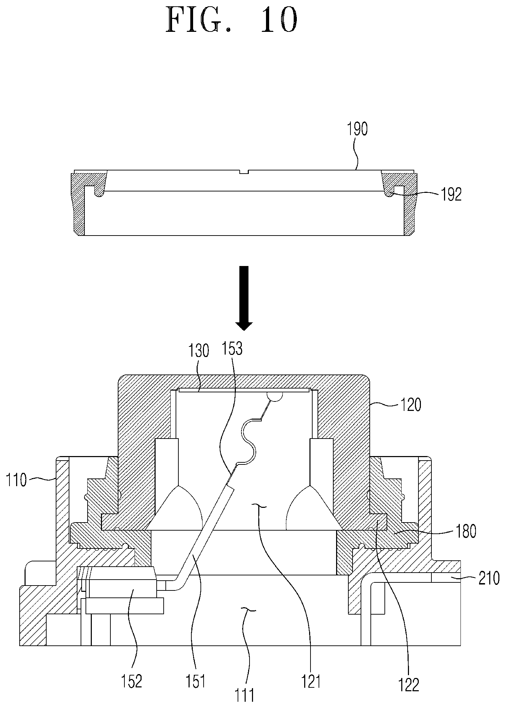

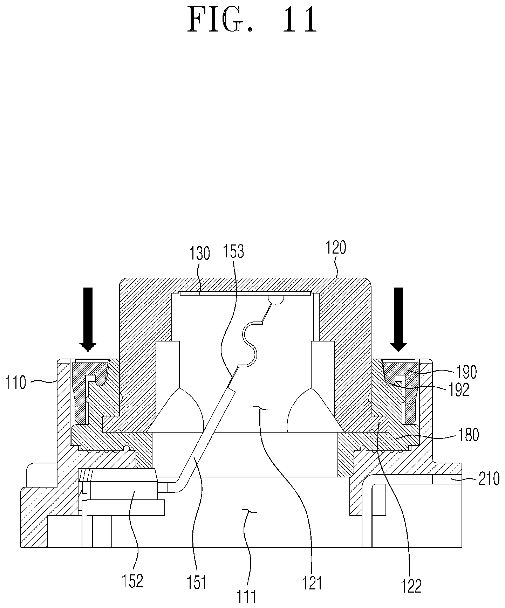

FIGS. 8 to 11 are views for describing characteristics of the front cover 190 inserted into the accommodation space 111 of the housing 110 in the ultrasonic sensor 100 according to an embodiment of the present disclosure.

The cell case 120 may be formed of a metal material such as aluminum, etc., and may transmit and receive ultrasonic waves together with the adhered piezoelectric element 130. In this case, a connection structure with the housing 110 injection-molded with plastic resin is required, and to secure waterproof performance, the ultrasonic sensor 100 according to an embodiment of the present disclosure may include the sealing cap 180 and the front cover 190 described above.

Herein, to form a watertight structure with the sealing cap 180, the end 122 of the cell case 120 may be fitted into the sealing cap 180. The end 122 of the cell case 120 may be formed to protrude from the outer circumferential surface of the cell case 120, and the sealing cap 180 may have formed therein a groove to allow the end 122 of the cell case 120 to be fitted thereinto.

The front cover 190 may be inserted into the accommodation space 111 to adjoin the front surface of the sealing cap 180 and surround the outer circumferential surface of the cell case 120. The front cover 190 may include a plurality of fitting ribs 191 formed to be spaced apart from each other on an outer circumferential surface thereof. The housing 110 may include a plurality of openings 113 formed to allow the plurality of fitting ribs 191 formed on the front cover 190 to be led therein.

That is, the ultrasonic sensor 100 according to an embodiment of the present disclosure may seal the front of the accommodation space 111 formed in the housing 110, through the front cover 190. In this case, by pressing the front cover 190, the plurality of fitting ribs 191 formed on the front cover 190 may be fitted into and engaged to the plurality of openings 113 formed in the housing 110. Thus, the assembly structure for the watertight structure may be simplified, thereby innovatively shortening the production process.

Moreover, the sealing cap 180 may include a rubber material having elasticity for the watertight structure. The front cover 190 may include a crush rib 192 formed to protrude to the rear thereof and pressed onto the front surface of the sealing cap 180. In this way, together with an engagement structure through the fitting ribs 191 and the openings 113 described above, the front cover 190 may be pressed onto the front surface of the sealing cap 180, thereby further improving watertight performance.

Thus, in the ultrasonic sensor 100 according to an embodiment of the present disclosure, to seal the front of the accommodation space formed in the housing 110, without a separate fusion process such as welding, the front cover 190 may be inserted into the accommodation space 111 merely by being pressed so as to be engaged to the housing 110, thereby simplifying the assembly process and thus innovatively shortening the production process.

To sum up, the ultrasonic sensor and the vehicle including the same according to the present disclosure may minimize the assembly error of the ultrasonic sensor included in the vehicle for use in the parking assistant system, thereby improving performance and reliability. Moreover, stable sensing performance and waterproof performance may be provided while enabling cheap and simple manufacturing.

The effects obtainable from the present disclosure are not limited to the effects mentioned above, and other effects not mentioned will be clearly understood by those skilled in the art to which the present disclosure belongs from the description below.

The above detailed description is to be construed in all aspects as illustrative and not restrictive. The scope of the present disclosure should be determined by reasonable interpretation of the appended claims and all changes coming within the equivalency range of the present disclosure are intended to be embraced in the scope of the present disclosure.

### [Description of Reference Numerals]

100: Ultrasonic Sensor
110: Housing
111: Accommodation Space
112: Seating Portion
1121: Fusion Projection
113: Opening
114: Connector
120: Cell Case
121: Inner Space
122: End
130: Piezoelectric Element
140: PCB Assembly
150: Lead-Pin Assembly
151: Lead Pin
152: Fixed Block
153: Wire
160: Filler
170: Rear Cover
180: Sealing Cap
190: Front Cover
192: Fitting Rib
192: Crush Rib
200: Protection Cap
210: Connector Pin

## Claims

1. An ultrasonic sensor comprising:
a housing open in a front and a rear thereof to form an accommodation space in the housing;
a cell case inserted into the front of the accommodation space and open in a rear of the cell case to form an inner space therein;
a piezoelectric element disposed in a front of the inner space;
a printed circuit board (PCB) assembly inserted into the accommodation space and disposed in the rear of the cell case;
a lead-pin assembly electrically connecting the piezoelectric element to the PCB assembly in the accommodation space;
a filler filled in a space requiring electrical connection between the piezoelectric element and the PCB assembly in the accommodation space and the inner space; and
a rear cover sealing a rear of the accommodation space,
wherein the lead-pin assembly comprises:
a lead pin having a first end electrically connected to the PCB assembly and a second end electrically connected to the piezoelectric element; and
a fixed block into which the lead pin is inserted and which is fused to the housing.

2. The ultrasonic sensor of claim 1, wherein the housing comprises a seating portion to which the fixed block is fused.

3. The ultrasonic sensor of claim 2, wherein the seating portion comprises a fusion projection formed to protrude, and the fixed block is fused to the seating portion as the fusion projection is melt by laser welding.

4. The ultrasonic sensor of claim 1, 2, or 3, wherein the lead-pin assembly is formed by insert-injection.

5. The ultrasonic sensor of any one of claims 1 to 4, further comprising:
a sealing cap inserted into the accommodation space to allow an end of the cell case to be fitted thereinto; and
a front cover inserted into the accommodation space to adjoin a front surface of the sealing cap and surrounding an outer circumferential surface of the cell case.

6. The ultrasonic sensor of claim 5, wherein the front cover comprises a plurality of fitting ribs formed to be spaced apart from each other on an outer circumferential surface thereof, and
the housing comprises a plurality of openings formed to allow the plurality of fitting ribs to be led therein.

7. The ultrasonic sensor of claim 5, or 6, wherein the front cover comprises a crush rib formed to protrude to a rear thereof and pressed to a front surface of the sealing cap.

8. The ultrasonic sensor of claim 5, 6, or 7, further comprising a protection cap disposed in a front of the front cover and surrounding the outer circumferential surface of the cell case protruding from the front of the housing.

9. The ultrasonic sensor of any one of claims 5 to 8, wherein an end of the cell case is formed to protrude from the outer circumferential surface of the cell case, and the sealing cap includes a groove to allow the end of the cell case to be fitted thereinto

10. The ultrasonic sensor of any one of claims 1 to 9, further comprising:
a connector pin having a first end electrically connected to the PCB assembly,
wherein the housing comprises a connector extending from a side thereof and accommodating a second end of the connector pin.

11. A vehicle comprising:
a vehicle body; and
an ultrasonic sensor mounted on the vehicle body and configured to sense an object around the vehicle body and measure a position and a distance of the sensed object,
wherein the ultrasonic sensor comprises:
a housing open in a front and a rear thereof to form an accommodation space in the housing;
a cell case inserted into the front of the accommodation space and open in a rear of the cell case to form an inner space therein;
a piezoelectric element adhered to a front inner surface of the cell case;
a printed circuit board (PCB) assembly inserted into the accommodation space and disposed in the rear of the cell case;
a lead-pin assembly electrically connecting the piezoelectric element to the PCB assembly in the accommodation space;
a filler filled in a space requiring electrical connection between the piezoelectric element and the PCB assembly in the accommodation space and the inner space; and
a rear cover sealing a rear of the accommodation space,
wherein the lead-pin assembly comprises:
a lead pin having a first end electrically connected to the PCB assembly and a second end electrically connected to the piezoelectric element; and
a fixed block into which the lead pin is inserted and which is fused to the housing.

12. The vehicle of claim 11, wherein the housing comprises a seating portion to which the fixed block is fused,
wherein the seating portion comprises a fusion projection formed to protrude, and the fixed block is fused to the seating portion as the fusion projection is melt by laser welding.

13. The vehicle of claim 11, or 12, further comprising:
a sealing cap inserted into the accommodation space to allow an end of the cell case to be fitted thereinto; and
a front cover inserted into the accommodation space to adjoin a front surface of the sealing cap and surrounding an outer circumferential surface of the cell case.

14. The vehicle of claim 13, wherein the front cover comprises a plurality of fitting ribs formed to be spaced apart from each other on an outer circumferential surface thereof, and
the housing comprises a plurality of openings formed to allow the plurality of fitting ribs to be led therein.

15. The vehicle of claim 13, or 14, wherein the front cover comprises a crush rib formed to protrude to a rear thereof and pressed to a front surface of the sealing cap.
